# EUROPÄISCHE PATENTANMELDUNG

(11) **EP 4 825 655 A1**
(43) Veröffentlichungstag der Anmeldung: **21.10.2026**
(21) Anmeldenummer: 26168341.1
(22) Anmeldetag: 27.03.2026
(51) Int. Cl.: B60N 2/14, B60N 2/06, B60N 2/24

(54) **KOMBINIERTE ROTATIONS- UND TRANSLATIONSBEWEGUNGSBEGRENZUNGSVORRICHTUNG**

(30) Priorität: 16.04.2025 DE 102025114905
(71) Anmelder: Isringhausen GmbH & Co. KG, 32657 Lemgo (DE)
(72) Erfinder: Bredemeier, Jörg, 31749 Auetal (DE); Milinski, Daniel, 32825 Blomberg (DE)
(74) Vertreter: DTS Patent- und Rechtsanwälte PartmbB

(57) **Zusammenfassung**

Die vorliegende Erfindung betrifft eine Vorrichtung zur Begrenzung einer Rotations- und Translationsbewegung (30) für eine Sitzbasis (10), wobei die Sitzbasis (10) ein Oberteil (11) und ein Unterteil (12) umfasst, wobei das Oberteil (11) und das Unterteil (12) relativ zueinander rotatorisch und/oder translatorisch über eine Verstelleinheit (20) bewegbar sind; umfassend mindestens ein flexibles Begrenzungselement (32) mit einem oberen Ende (33) und mit einem unteren Ende (34); wobei das obere Ende (33) an einer oberen Anbindungsstelle (16) an dem Oberteil (11) festgelegt ist; wobei das untere Ende (34) an einer unteren Anbindungsstelle (17) an dem Unterteil (12) festgelegt ist; wobei das mindestens eine flexible Begrenzungselement (32) die translatorische und/oder die rotatorische Bewegung des Oberteils (11) und des Unterteils (12) gegeneinander begrenzt.

## Beschreibung

Die vorliegende Erfindung betrifft eine Vorrichtung zur Begrenzung einer Rotations- und/oder Translationsbewegung. Die Erfindung betrifft auch einen Sitz für ein Fahrzeug der eine Vorrichtung zur Begrenzung einer Rotations- und/oder Translationsbewegung aufweist. Die Erfindung betrifft ebenfalls eine Verwendung eines flexiblen Begrenzungselements zur Begrenzung einer Rotations- und/oder Translationsbewegung.

Sitze, insbesondere in Fahrzeugen, beispielsweise in Nutzfahrzeugen, sollen sowohl die Anforderungen der Nutzer hinsichtlich der Ergonomie und Handhabung erfüllen als auch an die Rahmenbedingungen angepasst sein, welche durch dieses Fahrzeug vorgegeben werden. Dies kann zu einem Konflikt zwischen einer gewünschten, möglichst großen, Bewegungsfreiheit und einem begrenzten Platzangebot, insbesondere in einem Fahrzeug, beispielsweise einem Nutzfahrzeug führen. Zum einen sollen Kollisionen mit anderen Teilen, beispielweise in einem Fahrzeug, insbesondere einem Nutzfahrzeug vermieden werden. Zum anderen soll die Bedienung eines Sitzes, insbesondere in einem Fahrzeug, beispielsweise einem Nutzfahrzeug uneingeschränkt und möglichst effizient sein. Hierfür kann es erforderlich sein, einen vorhandenen Freiheitsgrad eines Sitzes an bestimmten Positionen und in bestimmten Stellungen, insbesondere in einem Fahrzeug, beispielsweise einem Nutzfahrzeug, zu begrenzen und an anderen Positionen oder Stellungen zu ermöglichen.

Zur Begrenzung einer Bewegung sind beispielsweise Kulissen und Anschläge bekannt. Insbesondere ist bekannt, einen Drehwinkel für einen Sitz so festzulegen, dass dieser unabhängig von seiner Position in einem Fahrzeug nicht mit anderen Teilen im Fahrzeug kollidiert. In solchen drehbaren Sitzen stellt sich das Problem, dass die Bewegungsfreiheit eines Nutzers eingeschränkt wird, was sich in einer verringerten Ergonomie bei längeren Einsätzen niederschlägt.

DE 10 2023 113 094 A1 betrifft einen Fahrzeugsitz, bei welchem eine Abhängigkeit zwischen Verlagerung und Drehwinkel durch ein erstes Anschlagelement und ein zweites Anschlagelement hergestellt werden kann.

Aus DE 10 2015 212 459 A1 ist ein Sitz für eine Baumaschine, sowie eine Baumaschine bekannt. Die darin beschriebene Anschlagbegrenzungseinrichtung schafft einen variablen Anschlag, der vom aktuellen Drehwinkel des Sitzes und der eingestellten Position der seitlichen Verschiebung des Sitzes abhängig ist und damit für unterschiedliche Sitzpositionen unterschiedliche Anschläge vorsieht. Die Anschlagbegrenzungseinrichtung kann eine Anschlagkulisse sowie eine mit der Anschlagkulisse zusammenwirkende Anschlageinrichtung aufweisen.

Die bekannten Lösungen aus dem Stand der Technik beschränken den Freiheitsgrad eines Fahrzeugsitzes entweder unnötig, oder sind in ihrer Herstellung, Bedienung und/oder in ihrem Einbau komplex.

Es ist die Aufgabe der vorliegenden Erfindung, die Einstellungsmöglichkeiten zur Begrenzung einer Rotations- und/oder Translationsbewegung zu erweitern und die Lösung der genannten Probleme besonders einfach und effizient umzusetzen.

Diese Aufgabe wird erfindungsgemäß gelöst durch eine Vorrichtung zur Begrenzung einer Rotations- und/oder Translationsbewegung mit den Merkmalen des Anspruchs 1. Die Aufgabe wird auch gelöst durch einen Sitz für ein Fahrzeug aufweisend eine Vorrichtung zur Begrenzung einer Rotations- und/oder Translationsbewegung mit den Merkmalen nach Anspruch 6. Die Aufgabe wird ebenfalls gelöst durch die Verwendung eines flexiblen Begrenzungselements entsprechend Anspruch 7. Vorteilhafte Ausgestaltungen sind in den Unteransprüchen angegeben.

Danach wird die Aufgabe gelöst durch eine Vorrichtung zur Begrenzung einer Rotations- und Translationsbewegung für eine Sitzbasis, wobei die Sitzbasis ein Oberteil und ein Unterteil umfasst, wobei das Oberteil und das Unterteil relativ zueinander rotatorisch und/oder translatorisch über eine Verstelleinheit bewegbar sind; umfassend mindestens ein flexibles Begrenzungselement mit einem oberen Ende und mit einem unteren Ende; wobei das obere Ende an einer oberen Anbindungsstelle an dem Oberteil festgelegt ist; wobei das untere Ende an einer unteren Anbindungsstelle an dem Unterteil festgelegt ist; wobei das mindestens eine flexible Begrenzungselement die translatorische und/oder die rotatorische Bewegung des Oberteils und des Unterteils gegeneinander begrenzt.

Eine Vorrichtung zur Begrenzung einer Rotations- und Translationsbewegung für eine Sitzbasis begrenzt die Freiheitsgrade der einzelnen Elemente der Sitzbasis zueinander. Einerseits wird eine Rotationsbewegung der einzelnen Elemente begrenzt und andererseits wird eine Translationsbewegung der einzelnen Elemente begrenzt.

Eine Sitzbasis bezeichnet insbesondere die Verbindung zwischen Sitzaufbau und Boden eines Fahrzeugs. Die Sitzbasis besteht bevorzugt aus einem Unterteil der Sitzbasis, das mit dem Boden eines Fahrzeugs fest verbunden werden kann und einem Oberteil der Sitzbasis auf dem ein Sitzaufbau mittelbar oder unmittelbar aufgebracht werden kann. Zwischen dem Oberteil und dem Unterteil der Sitzbasis kann eine Verstelleinheit vorgesehen sein, die eine translatorische und/oder rotatorische Bewegung zulässt. Bevorzugt sind hierfür ein Rotationselement und/oder ein Translationselement vorgesehen.

Eine translatorische Bewegung bezeichnet eine Bewegung entlang einer Achse. Bevorzugt entlang der Längsachse und/oder der Querachse des Fahrzeugs.

Weiter bevorzugt bezeichnet eine translatorische Bewegung eine Bewegung entlang der Längsachse des Fahrzeugs.

Eine rotatorische Bewegung bezeichnet eine Drehung um eine Achse. Die Achse kann festgelegt sein. Bevorzugt handelt es sich bei der Rotationsachse um die Hochachse des Oberteils der Sitzbasis, insbesondere um die Hochachse eines Sitzes.

Ein Translationselement ermöglicht die beschriebene translatorische Bewegung. Das Translationselement kann so ausgestaltet sein, dass es die translatorische Bewegung führt. Bevorzugt verfügt das Translationselement über eine Arretierfunktion, welche die Fixierung einer relativen Position des Oberteils und des Unterteils der Sitzbasis zueinander ermöglicht. Weiter bevorzugt handelt es sich um eine Schienenführung.

Das Rotationselement ermöglicht die beschriebene rotatorische Bewegung. Das Rotationselement kann dazu eingerichtet sein, das Oberteil der Sitzbasis drehbar zu lagern.

Das Oberteil der Sitzbasis und/oder das Unterteil der Sitzbasis können relativ zueinander rotatorisch und/oder translatorisch bewegt werden, was insbesondere über eine Verstelleinheit ermöglicht wird. Eine relative Bewegung kann durch eine rotatorische und/oder translatorische Bewegung des Unter- und/oder des Oberteils der Sitzbasis unabhängig voneinander erfolgen. Bevorzugt kann eine relative Bewegung durch eine rotatorische und/oder translatorische Bewegung des Oberteils der Sitzbasis zu einem in seiner Position fixierten Unterteil der Sitzbasis erfolgen.

Die relative translatorische und/oder rotatorische Bewegung des Oberteils und des Unterteils der Sitzbasis zueinander wird erfindungsgemäß durch mindestens ein flexibles Begrenzungselement begrenzt.

Das mindestens eine flexible Begrenzungselement ist auf Zug belastbar; wobei das flexible Begrenzungselement bevorzugt bei Belastung gespannt wird; wobei das flexible Begrenzungselement, bei Belastung auf Zug, die auftretenden Kräfte, mittelbar oder unmittelbar, bevorzugt auf die Sitzbasis übertragen kann. Insbesondere erreicht das flexible Begrenzungselement in gespanntem Zustand eine vorgegebene Länge. Weiter bevorzugt kann das flexible Begrenzungselement ein elastisches Element sein mit einer endlichen Ausdehnung auf eine vorgegebene Länge.

Das mindestens eine flexible Begrenzungselement weist bevorzugt ein oberes und ein unteres Ende auf. Ein oberes und ein unteres Ende dimensionieren bevorzugt das mindestens eine flexible Begrenzungselement, wobei der Abschnitt zwischen einem oberen und einem unteren Ende der Länge eines flexiblen Begrenzungselements entspricht.

Ein oberes und ein unteres Ende kann insbesondere auch ein Anfang und ein Ende eines flexiblen Begrenzungselements sein. Bevorzugt wird durch die Bestimmung eines oberen und eines unteren Endes der Bezug zu dem Element der Sitzbasis beschrieben, an welchem das jeweilige Ende festgelegt wird. Weiter bevorzugt kann das obere Ende an einer oberen Anbindungsstelle an dem Oberteil der Sitzbasis und/oder das untere Ende an einer unteren Anbindungsstelle an dem Unterteil der Sitzbasis festgelegt werden.

Eine Anbindungsstelle bezeichnet bevorzugt eine Position an dem Oberteil und/oder Unterteil der Sitzbasis; wobei sich an einer Anbindungsstelle weiter bevorzugt eine Aufnahme zur Verbindung eines Anbindungselements mit einem Oberteil und/oder Unterteil der Sitzbasis befindet; wobei eine Aufnahme insbesondere mindestens ein Gewinde aufweisen kann.

Festgelegt wird ein Ende eines flexiblen Begrenzungselements insbesondere indem es mit dem korrespondierenden Element der Sitzbasis mittelbar oder unmittelbar verbunden wird, wobei diese Verbindung bevorzugt lösbar ist.

Insbesondere kann die Verbindung eines Endes eines flexiblen Begrenzungselements über ein Anbindungselement erfolgen, wobei das Anbindungselement bevorzugt zwischen einem Ende eines flexiblen Begrenzungselements und einem Oberteil und/oder Unterteil der Sitzbasis positioniert wird.

Ein Anbindungselement ist bevorzugt mit einem Ende eines flexiblen Begrenzungselements und/oder mit einem Oberteil und/oder Unterteil der Sitzbasis verbindbar; wobei die Verbindung mit einem Teil der Sitzbasis bevorzugt an einer Anbindungsstelle erfolgt. Insbesondere kann ein oberes Ende eines flexiblen Begrenzungselements über ein oberes Anbindungselement mit dem Oberteil der Sitzbasis und/oder ein unteres Ende eines flexiblen Begrenzungselements über ein unteres Anbindungselement mit dem Unterteil der Sitzbasis verbunden werden. Bevorzugt ist die Verbindung eines Anbindungselements mit einem Teil der Sitzbasis und/oder mit einem Ende eines flexiblen Begrenzungselements lösbar. Insbesondere wird durch die Bestimmung eines oberen und eines unteren Anbindungselements der Bezug zu dem Teil der Sitzbasis beschrieben, an welchem das jeweilige Anbindungselement festgelegt wird.

Ein Anbindungselement kann einteilig oder mehrteilig ausgebildet sein, wobei es bevorzugt Verbindungsstellen zur Verbindung mit einem Ende eines flexiblen Begrenzungselements und/oder zur Verbindung mit einem Teil der Sitzbasis aufweist. Bevorzugt ermöglicht ein Anbindungselement eine Ausrichtung eines flexiblen Begrenzungselements, insbesondere bei dessen Belastung auf Zug. Ein Anbindungselement kann beispielsweise eine Platte, ein Winkelelement, einen Schäkel, eine Öse und/oder einen Wirbel oder eine Kombination hiervon umfassen. Insbesondere kann ein Anbindungselement aus Metall, Kunststoff und/oder einem Verbundstoff oder einer Kombination hieraus bestehen.

Erfindungsgemäß begrenzt das mindestens eine flexible Begrenzungselement die translatorische und/oder die rotatorische Bewegung des Oberteils der Sitzbasis und des Unterteils der Sitzbasis gegeneinander, wobei die Bewegung bevorzugt so begrenzt wird, dass lediglich ein vorgegebener maximaler Drehwinkel und/oder eine vorgegebene maximale translatorische Bewegung erreicht werden kann.

Die maximal zulässige rotatorische und/oder translatorische Bewegung kann bevorzugt über die Positionierung der Anbindungsstellen an dem Oberteil und/oder Unterteil der Sitzbasis vorgegeben werden; wobei die obere Anbindungsstelle bevorzugt unterhalb des Oberteils der Sitzbasis und in Sitzrichtung hinten positioniert ist; wobei die untere Anbindungsstelle bevorzugt auf dem Unterteil der Sitzbasis in Sitzrichtung vorne positioniert ist; wobei die Rotationsbewegung nach rechts und/oder die Translationsbewegung durch die Positionierung der Anbindungsstellen in Sitzrichtung rechts der Hochachse des Oberteils und/oder Unterteils der Sitzbasis begrenzt wird; wobei die Rotationsbewegung nach links und/oder die Translationsbewegung bevorzugt durch die Positionierung der Anbindungsstellen in Sitzrichtung links der Hochachse des Oberteils und/oder Unterteils der Sitzbasis begrenzt wird.

Bevorzugt kann die Begrenzung der rotatorischen Bewegung des Oberteils und des Unterteils der Sitzbasis zueinander durch ein flexibles Begrenzungselement erfolgen und/oder die Begrenzung der translatorischen Bewegung des Oberteils und des Unterteils der Sitzbasis zueinander durch mindestens ein weiteres flexibles Begrenzungselement vorgenommen werden.

Weiter bevorzugt kann die Begrenzung der rotatorischen und/oder translatorischen Bewegung des Oberteils und des Unterteils der Sitzbasis zueinander durch ein einziges flexibles Begrenzungselement erfolgen.

Insbesondere kann die rotatorische Bewegung des Oberteils und des Unterteils der Sitzbasis zueinander lediglich in einer festgelegten Drehrichtung in Sitzrichtung nach rechts oder nach links begrenzt werden, während die jeweils andere Drehrichtung nicht begrenzt wird.

Insbesondere kann die rotatorische Bewegung des Oberteils und des Unterteils der Sitzbasis zueinander in beide Richtungen in Sitzrichtung nach links und nach rechts begrenzt werden. Bevorzugt kann dies durch zwei Vorrichtungen zur Begrenzung der Translations- und/oder Rotationsbewegung erfolgen, wobei eine erste Vorrichtung die Rotationsbewegung zu einer Seite begrenzt und eine zweite Vorrichtung die Rotationsbewegung zu einer anderen Seite begrenzt, insbesondere können beide Vorrichtungen die Translationsbewegung begrenzen. Bevorzugt kann die Translationsbewegung nur von einer der beiden Vorrichtungen begrenzt werden.

Mit der Erfindung kann besonders einfach erreicht werden, dass ein möglicher Drehwinkel zwischen einem Oberteil einer Sitzbasis und einem Unterteil einer Sitzbasis, abhängig von einer translatorischen Verschiebung zwischen beiden Teilen, begrenzt wird. Darüber hinaus wird erreicht, dass die translatorische Verschiebung zwischen den Teilen der Sitzbasis in Abhängigkeit eines Drehwinkels zwischen den Teilen durch ein einziges flexibles Begrenzungselement begrenzt wird. Hierdurch wird es möglich, die Drehbarkeit eines Sitzes in Bereichen eines Fahrzeugs mit geringerem Platzangebot zu begrenzen, ohne die Drehbarkeit zusätzlich in Bereichen eines Fahrzeugs mit größerem Platzangebot unnötig begrenzen zu müssen. Zudem wird es möglich, die Bewegungsbegrenzung durch die Positionierung der Anbindungsstellen, individuell und besonderes einfach auf das zur Verfügung stehende Platzangebot anzupassen.

Es kann vorteilhaft sein, die Begrenzung der translatorischen und/oder rotatorischen Bewegung, über eine relative Lage der oberen Anbindungsstelle und der unteren Anbindungsstelle zueinander und/oder über eine Länge des flexiblen Begrenzungselements, variabel einstellbar zu begrenzen.

Bevorzugt kann die Begrenzung der translatorischen und/oder rotatorischen Bewegung von der relativen Lage der Anbindungsstellen zueinander abhängen; wobei mit der relativen Lage insbesondere die Entfernung der Anbindungsstellen zueinander beschrieben wird. Weiter bevorzugt kann sich die relative Lage der Anbindungsstellen zueinander durch eine translatorische und/oder rotatorische Bewegung des Oberteils und/oder des Unterteils der Sitzbasis verändern; wobei die translatorische und/oder rotatorische Bewegung bevorzugt über die erfindungsgemäße Vorrichtung umso mehr eingeschränkt, je weiter die Positionen der Anbindungsstellen voneinander entfernt liegen.

Insbesondere ist die Begrenzung der translatorischen und/oder rotatorischen Bewegung durch Vergrößern oder Verkleinern des Abstandes der Anbindungsstellen zueinander variabel einstellbar; wobei die Einstellung bevorzugt durch Veränderung der Position des Oberteils und/oder des Unterteils der Sitzbasis relativ zueinander erfolgt.

Besonders vorteilhaft ist das Unterteil der Sitzbasis und damit eine untere Anbindungsstelle stationär; wobei die untere Anbindungsstelle als stationäre Referenz für die obere Anbindungsstelle dient; wobei die Lage der oberen Anbindungsstelle relativ zur unteren Anbindungsstelle bevorzugt durch eine translatorische und/oder rotatorische Bewegung des Oberteils der Sitzbasis verändert wird; wobei die Veränderung der Lage der oberen Anbindungsstelle relativ zur unteren Anbindungsstelle die Begrenzung der maximal zulässigen translatorischen und/oder rotatorischen Bewegung des Oberteils der Sitzbasis einstellt.

Weiter bevorzugt erfolgt die Einstellung der Bewegungsbegrenzung über die festgelegte Länge eines flexiblen Begrenzungselements; wobei die Länge des flexiblen Begrenzungselements bevorzugt die maximale Entfernung der Anbindungsstellen voneinander bestimmt; wobei die Länge insbesondere zwischen 50 mm und 600 mm, weiter bevorzugt zwischen 100 mm und 500 mm liegt.

Dies ist besonders vorteilhaft, da durch die Erfindung die Bedienung vereinfacht, die Bewegungsfreiheit für einen Nutzer erweitert und die Ergonomie für ebendiesen verbessert wird. Ebenso ist die Vorrichtung besonders einfach an die Dimensionen einer Sitzbasis und das zur Verfügung stehende Platzangebot, insbesondere in einem Fahrzeug, beispielsweise in einem Nutzfahrzeug, anpassbar.

Es kann vorteilhaft sein, wenn ein flexibles Begrenzungselement der Vorrichtung zur Begrenzung der translatorischen und/oder rotatorischen Bewegung ein Band ist. Bevorzugt kann das Band ein Gurtband sein.

Ein Band bezeichnet ein Element, das insbesondere die beschriebenen Eigenschaften des flexiblen Begrenzungselements, auf Zug belastbar, erfüllt; wobei das Band insbesondere ein gewebtes Band, ein Gurt oder ein Gurtband sein kann.

Das Band kann insbesondere eine geringe elastische Verformung aufweisen; wobei der Maximalwert der statischen Dehnung bei 10 kN insbesondere in einem Bereich zwischen 6 % und 20 %, weiter bevorzugt zwischen 11 % und 15 % liegen kann.

Das Band kann insbesondere aus einem reißfesten Material, beispielsweise aus Nylon oder Polyester bestehen.

Das Band kann insbesondere aus einem schwerentflammbaren Material bestehen.

Bevorzugt kann ein flexibles Begrenzungselement beispielsweise ein Kettenelement mit Kettengliedern, oder ein elastisches Element mit einer festgelegten maximalen Auslenkung, insbesondere ein Federelement mit einer festgelegten maximalen Auslenkung sein.

Dies ist besonders vorteilhaft, da es sich hierbei um ein einfaches, wartungsfreies Element handelt, welches bereits in unterschiedlichen Ausführungsformen verfügbar und in seiner Länge einfach anpassbar ist.

Es kann vorteilhaft sein, wenn das flexible Begrenzungselement der erfindungsgemäßen Vorrichtung aufrollbar ist, insbesondere über einen automatischen Einzug.

Ein automatischer Einzug kann das flexible Begrenzungselement bevorzugt teilweise oder vollständig aufnehmen; wobei der automatische Einzug das flexible Begrenzungselement bevorzugt aufrollt, wenn dieses nicht gespannt, und damit entlastet ist; wobei der automatische Einzug das flexible Begrenzungselement bevorzugt freigibt, wenn dieses auf Zug belastet und damit gespannt wird. Ein automatischer Einzug kann insbesondere über ein elastisches Element, beispielsweise ein Federelement verfügen, welches zur Rückholung eines abgewickelten flexiblen Begrenzungselements geeignet ist.

Aufgerollt wird ein flexibles Begrenzungselement bevorzugt, indem es auf sich selbst aufgewickelt wird, insbesondere so, dass sich das Aufwickeln des flexiblen Begrenzungselement durch Abrollen leicht rückgängig machen lässt. Bevorzugt erfolgt die Aufwicklung über ein Trägerelement; wobei das Trägerelement bevorzugt ein rotationssymmetrisches Element, insbesondere eine Rolle und/oder eine Spindel sein kann.

Bevorzugt kann der automatische Einzug eine Freigabe des ganz oder teilweise aufgerollten flexiblen Begrenzungselements durch Abrollen sperren; wobei durch Sperren der Freigabe eines ganz oder teilweise aufgerollten flexiblen Begrenzungselements bevorzugt dessen Länge verändert, insbesondere gekürzt, werden kann; wobei das Sperren des Abrollens bevorzugt steuerbar ist. Insbesondere kann das Sperren des Abrollens eines flexiblen Begrenzungselements während der Nutzung gesteuert werden; wobei bevorzugt ein Nutzer die Steuerung vornimmt. Bevorzugt kann das Steuern des Sperrens manuell, insbesondere über einen Hebel erfolgen. Weiter bevorzugt kann das Steuern des Sperrens über ein elektrisches Bedienelement erfolgen.

Die Aufrollung eines flexiblen Begrenzungselements ist insbesondere vorteilhaft, da sich ein flexible Begrenzungselement hierdurch platzsparend verstauen lässt, wenn es nicht gespannt wird. Weiter bietet der Aufrollmechanismus vorteilhaft eine zusätzliche Funktionalität, mit welcher eine Länge eines flexiblen Begrenzungselements auch während der Nutzung verändert und eingestellt werden kann, was eine zusätzliche individuelle Anpassung an die Nutzerbedürfnisse ermöglicht.

Weiter kann es vorteilhaft sein, wenn die Position der oberen Anbindungsstelle und/oder die Position der unteren Anbindungsstelle einstellbar ist.

Die Positionen der oberen und/oder unteren Anbindungsstellen können bevorzugt unabhängig voneinander eingestellt werden; wobei eine Einstellung bevorzugt eine Veränderung der Positionen herbeiführt; wobei die Einstellung insbesondere während der Nutzung durch einen Nutzer erfolgen kann. Die Position einer oberen und/oder unteren Anbindungsstelle kann aus einer ursprünglichen Ausgangslage heraus, bevorzugt in Sitzrichtung nach links und/oder nach rechts verändert werden; weiter bevorzugt in Sitzrichtung nach vorne und/oder hinten.

Bevorzugt kann mit einer Veränderung der Anbindungsstellen eines flexiblen Begrenzungselements aus einer Ausgangslage in Sitzrichtung auf einer Seite der Hochachse, hin zu einer Position auf der anderen Seite der Hochachse eine Umkehr der Begrenzungsrichtung der rotatorischen Bewegungsbegrenzung erreicht werden; wobei eine Seite der Hochachse bevorzugt eine in Sitzrichtung linke und/oder rechte Seite des Oberteils und/oder Unterteils der Sitzbasis sein kann. Insbesondere kann durch Veränderung der Positionen von einer Ausgangslage rechts der Hochachse hin zu neuen Positionen links der Hochachse die Begrenzung einer rotatorischen Bewegung nach, in Drehrichtung und Sitzrichtung, rechts in eine Begrenzung nach links umgekehrt werden. Weiter bevorzugt kann durch Veränderung der Positionen von einer Ausgangslage links der Hochachse hin zu neuen Positionen rechts der Hochachse die Begrenzung einer rotatorischen Bewegung nach, in Drehrichtung und Sitzrichtung, links in eine Begrenzung nach rechts umgekehrt werden.

Bevorzugt kann durch eine Veränderung der Positionen der Anbindungsstellen die Entfernung zwischen den Anbindungsstellen verändert werden; wobei eine Verkürzung der Entfernung der Anbindungsstellen bei gleichbleibender Länge des flexiblen Begrenzungselements die maximal zugelassene rotatorische und/oder translatorische Bewegung vergrößert; wobei eine Vergrößerung der Entfernung der Anbindungsstellen bei gleichbleibender Länge des flexiblen Begrenzungselements die maximal zugelassene rotatorische und/oder translatorische Bewegung verringert.

Die Einstellung der Positionen kann bevorzugt entlang einer Führung erfolgen; wobei die Führung insbesondere eine Veränderung einer Position entlang einer vorgegebenen Achse; weiter bevorzugt entlang einer Kreisbahn zulässt; wobei die Führung weiter bevorzugt eine Arretierungsfunktion aufweisen kann, welche insbesondere eine Anbindungsstelle an einer neuen Position fixieren kann. Die Fixierung einer Anbindungsstelle erfolgt insbesondere so, dass eine Kraft von einem flexiblen Begrenzungselement auf eine Anbindungsstelle übertragen werden kann; wobei die Kraftübertragung bevorzugt formschlüssig erfolgen kann; wobei ein formschlüssiges Element bevorzugt als Bolzen in einer Aussparung ausgeführt sein kann; wobei der Bolzen bevorzugt ein- und ausgerastet werden kann. Bevorzugt ist das Ein- und Ausrasten eines formschlüssigen Elements steuerbar; bevorzugt durch einen mechanischen Mechanismus, beispielsweise durch ein Federelement; wobei die Steuerung bevorzugt von einem Nutzer, insbesondere über einen Hebelmechanismus, vorgenommen werden kann. Weiter bevorzugt kann das Ein- und Ausrasten eines formschlüssigen Elements elektrisch gesteuert werden; wobei die Steuerung bevorzugt von einem Nutzer, insbesondere über ein Bedienelement, vorgenommen werden kann.

Hierdurch wird es erfindungsgemäß möglich, die Begrenzung der translatorischen und/oder rotatorischen Bewegung während der Nutzung anzupassen. Dies hat den Vorteil, dass eine Bewegungsbegrenzung individuell an die jeweiligen Nutzerbedürfnisse angepasst werden kann.

Die Aufgabe der Erfindung wird ebenfalls gelöst durch einen Sitz für ein Fahrzeug, insbesondere für ein Nutzfahrzeug, der eine erfindungsgemäße Vorrichtung zur Begrenzung einer Rotations- und Translationsbewegung aufweist.

Die Vorrichtung zur Begrenzung einer Rotations- und Translationsbewegung kann bevorzugt bereits in den Sitz für ein Fahrzeug integriert sein; wobei der maximal mögliche Drehwinkel und/oder die maximale translatorische Bewegung, die ein Sitz zurücklegen kann, bevorzugt auf das individuelle Platzangebot im Fahrzeug, insbesondere in einem Nutzfahrzeug, ausgelegt ist.

Ein Sitz für ein Fahrzeug, insbesondere für ein Nutzfahrzeug kann eine Sitzbasis mit einem Oberteil und einem Unterteil aufweisen, wobei diese beiden Teile relativ zueinander rotatorisch und/oder translatorische bewegt werden können. Die rotatorische und/oder translatorische Bewegung kann durch eine Verstelleinheit ermöglicht werden, welche zwischen dem Oberteil und dem Unterteil der Sitzbasis positioniert sein kann. Das Unterteil der Sitzbasis kann mit dem Fahrzeugboden verbunden werden. Ein Sitz für ein Fahrzeug, insbesondere ein Nutzfahrzeug kann zudem einen Sitzaufbau aufweisen, welcher dazu geeignet ist, das Sitzen, insbesondere das ergonomische Sitzen, in einem Fahrzeug, insbesondere einem Nutzfahrzeug für einen Nutzer zu ermöglichen. Der Sitzaufbau kann bevorzugt eine Sitzfläche und eine Rückenlehne aufweisen. Insbesondere kann der Sitzaufbau mindestens eine Armlehne aufweisen; wobei die mindestens eine Armlehne verstellbar sein kann, bevorzugt kann sie an einem Drehpunkt nach oben und/oder unten geklappt werden.

Ein Nutzfahrzeug kann ein Fahrzeug sein, welches dazu eingerichtet ist, Personen und/oder Güter zu transportieren und/oder Lasten zu ziehen und/oder eingesetzt wird, um Arbeitsleistungen zu erbringen. Ein Nutzfahrzeug kann insbesondere ein Lastkraftwagen, ein Omnibus, eine Agrarmaschine und/oder eine Baumaschine sein.

Ein Sitz für ein Fahrzeug, insbesondere ein Nutzfahrzeug, weist eine Vorrichtung zur Begrenzung einer Rotations- und Translationsbewegung auf. Der Sitz weist daher die gleichen Vorteile auf wie eine Vorrichtung zur Begrenzung einer Rotations- und Translationsbewegung und kann in entsprechender Weise weitergebildet werden; ebenso gelten umgekehrt die Vorteile des Sitzes jeweils auch für die Vorrichtung zur Begrenzung einer Rotations- und Translationsbewegung.

Die Aufgabe der Erfindung wird zudem gelöst durch eine Verwendung mindestens eines flexiblen Begrenzungselements zur Begrenzung einer rotatorischen und/oder translatorischen Bewegung eines Oberteils und eines Unterteils relativ zueinander; wobei die Begrenzung der Bewegung durch das Festlegen eines oberen Endes des flexiblen Begrenzungselements an einer oberen Anbindungsstelle am Oberteil und eines unteren Endes des flexiblen Begrenzungselements an einer unteren Anbindungsstelle am Unterteil erfolgt.

Durch die Verwendung eines bevorzugt gemeinsamen flexiblen Begrenzungselements zur Begrenzung der rotatorischen und/oder translatorischen Bewegung anstatt beispielsweise zweier starrer Anschläge kann eine Kopplung der translatorischen Bewegung an die rotatorische Bewegung und/oder der rotatorischen Bewegung an die translatorische Bewegung erfolgen. Insbesondere kann diese Kopplung durch ein einziges flexibles Begrenzungselement erfolgen.

Die erfindungsgemäße Aufgabe kann hierdurch besonders einfach und effizient gelöst werden. Insbesondere kann eine Verbesserung der Ergonomie mit dem Einsatz einer geringen Anzahl benötigter Bauteile erreicht werden.

Die Verwendung mindestens eines flexiblen Begrenzungselements ist bevorzugt dazu ausgebildet, die beschriebene rotatorische und/oder translatorische Bewegung zu begrenzen. Die Verwendung weist daher die gleichen Vorteile auf wie das flexible Begrenzungselement und kann in entsprechender Weise weitergebildet werden; ebenso gelten umgekehrt die Vorteile der Verwendung jeweils auch für das flexible Begrenzungselement.

Weitere Einzelheiten und Vorteile der Erfindung werden anhand der in den Zeichnungen dargestellten Ausführungsbeispiele näher erläutert.

Es zeigen:
- Fig. 1a - 1c: eine beispielhafte schematische Darstellung einer Vorrichtung zur Begrenzung einer Rotations- und/oder Translationsbewegung, festgelegt an einer Sitzbasis mit einer Ausführungsform mit Anbindungselementen und einem Gurtband;
- Fig. 2a - 2c: einen integrierten Einbau einer Ausführungsform einer Vorrichtung zur Begrenzung einer Rotations- und/oder Translationsbewegung mit Anbindungselementen und einem Gurtband;
- Fig. 3a - 3c: einen nachrüstbaren Einbau einer Ausführungsform einer Vorrichtung zur Begrenzung einer Rotations- und/oder Translationsbewegung mit Anbindungselementen und einem Gurtband; und
- Fig. 4a - 4d: eine schematische Darstellung beispielhafter Positionen der oberen und unteren Anbindungsstellen.

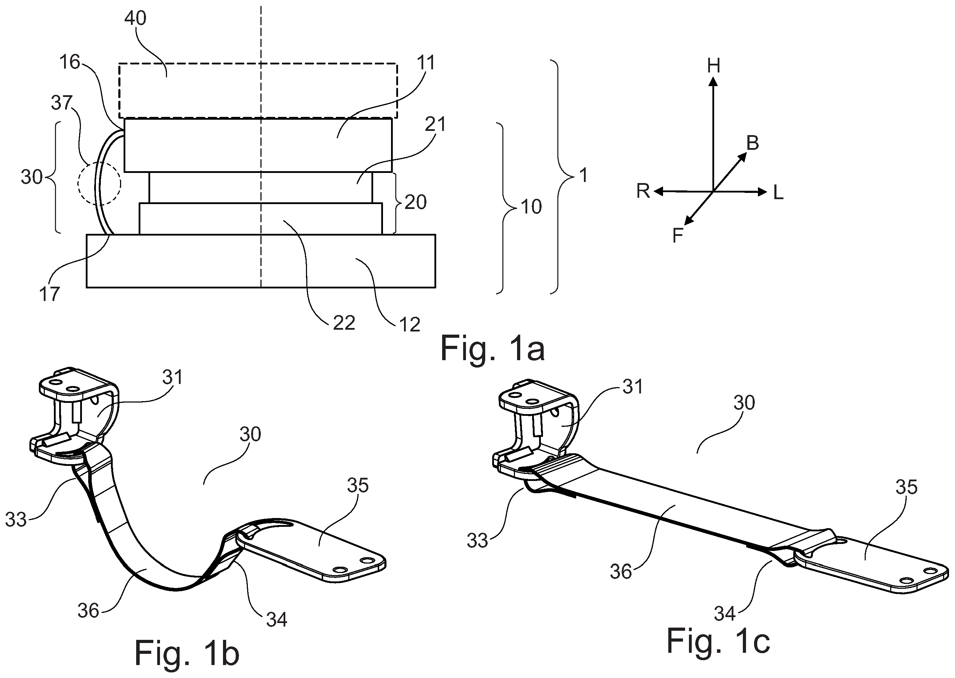

In Figur 1a wird eine schematische Darstellung einer Vorrichtung zur Begrenzung einer Rotations- und/oder Translationsbewegung 30 und deren Festlegung an einer Sitzbasis 10 eines Sitzes 1 gezeigt. Die Sitzbasis 10 umfasst ein Oberteil 11 und ein Unterteil 12, sowie eine Verstelleinheit 20. Die Verstelleinheit 20 wird zudem als bestehend aus einem Rotationselement 21 und einem Translationselement 22 gezeigt. Die Verstelleinheit 20 ist zwischen dem Oberteil 11 und dem Unterteil 12 der Sitzbasis 10 positioniert.

Die Vorrichtung zur Begrenzung einer Rotations- und/oder Translationsbewegung 30 ist an einer oberen Anbindungsstelle 16 an dem Oberteil 11 der Sitzbasis 10 festgelegt und an einer unteren Anbindungsstelle 17 an dem Unterteil 12 der Sitzbasis 10. Auf dem Oberteil 11 der Sitzbasis 10 kann der Sitzaufbau 40 angebracht werden, wie in Figur 1a mit gestrichelter Linie angedeutet.

Die Richtungen vorne und hinten, sowie rechts und links beziehen sich auf die Sitzrichtung und werden in dem gezeigten Koordinatensystem veranschaulicht. Die R- und L-Achse gibt links und rechts an, die Richtung B gibt die Richtung nach hinten an, die Richtung F zeigt nach vorne. Die H-Achse ist die Hochachse, welche auch die Rotationsachse darstellt. Sie wird zusätzlich durch die gestrichelte vertikale Linie in Figur 1a als Hochachse des Oberteils 11 der Sitzbasis 10 gezeigt.

Die Figuren 1b und 1c zeigen eine konkrete Ausführungsform der Vorrichtung zur Begrenzung einer Rotations- und/oder Translationsbewegung 30 aus Figur 1a. In dieser Ausführungsform ist das flexible Begrenzungselement als Gurtband 36 ausgeführt. Im Weiteren wird zur Beschreibung der Funktionsweise des in 1a dargestellten Aufbaus, das konkrete flexible Begrenzungselement des Gurtbandes 36 aus Figuren 1b und 1c herangezogen. Figur 1b zeigt ein Gurtband 36 in einem entlasteten Zustand, wie es durchhängt. Figur 1c zeigt das Gurtband 36 in einem voll gespannten Zustand. Der Aufbau der Vorrichtung zur Begrenzung einer Rotations- und/oder Translationsbewegung 30 ist für Figur 1b und 1c der gleiche und kann daher anhand von Figur 1b beschrieben werden.

Ein oberes Ende 33 des Gurtbandes ist mit einem oberen Anbindungselement 31 und ein unteres Ende 34 des Gurtbandes 36 mit einem unteren Anbindungselement 35 verbunden. Die Verbindung der beiden Enden mit den Anbindungselementen 31 und 35 erfolgt über eine Schlaufe am jeweiligen Ende des Gurtbandes 36. Hierdurch wird das obere Ende 33 mittelbar über das obere Anbindungselement 31 an der oberen Anbindungsstelle 16 an dem Oberteil 11 der Sitzbasis 10 aus Figur 1a festgelegt. Gleiches gilt für das untere Ende 34 des Gurtbandes 36. Dieses wir mittelbar über das untere Anbindungselement 35 an der unteren Anbindungsstelle 17 am Unterteil 12 der Sitzbasis 10 aus Figur 1a festgelegt.

In der konkreten Ausführungsform in den Figuren 1b und 1c weist das Gurtband 36 eine gestreckte Länge zwischen den Anbindungselementen 31 und 35 von 221 mm und eine Breite von 38 mm auf. Durch die Schlaufen an den beiden Enden des Gurtbandes entsteht zudem eine Überlappung des Gurtbandes von 58 mm jeweils an dem oberen 33 und unteren Ende 34.

In der konkreten Ausführungsform in den Figuren 1b und 1c weist das Gurtband 36 zudem eine Zerreißkraft von über 10 kN auf.

Das Material des Gurtbandes 36 in der konkreten Ausführungsform ist zudem schwerentflammbar, für einen Temperaturbereich von -40 °C bis +85 °C ausgelegt und erreicht eine maximale statische Dehnung von 12 % bei 10 kN.

Das obere Anbindungselement 31 ist als Winkelelement aus Metall, das untere Anbindungselement 35 ist als Platte aus Metall ausgeführt. An beiden Anbindungselementen ist eine kreisbogenförmige Aussparung zu erkennen, an welcher jeweils das obere 33 und untere 34 Ende des Gurtbandes 36 verbunden ist. Das untere Anbindungselement 35 weist zwei Durchgangsbohrungen auf. Das obere Anbindungselement sieht drei Durchgangsbohrungen vor. Über die Durchgangsbohrungen lassen sich die Anbindungselemente an dem Oberteil 11 und dem Unterteil 12 der Sitzbasis 10 anbringen.

Zusätzlich wird durch einen gestrichelten Kreis in Figur 1a ein automatischer Einzug 37 angedeutet, der in einer konkreten Ausführungsform zwischen einem oberen 31 und einem unteren Ende 34 des flexiblen Begrenzungselements positioniert ist.

Das Unterteil 12 der Sitzbasis ist in dem Ausführungsbeispiel in Figur 1a fixiert und damit stationär. Das Translationselement 22 der Verstelleinheit 20 lässt eine translatorische Bewegung des Oberteils 11 der Sitzbasis 10 zu, sodass sich dieses nach vorne und nach hinten verschieben kann. Die Bewegung nach vorne entspricht einer Bewegung aus der Zeichenebene heraus und die Bewegung nach hinten entspricht einer Bewegung in die Zeichenebene hinein. Das Rotationselement 21 lässt eine Rotation des Oberteils 11 der Sitzbasis 10 zu, sodass sich dieses um die eigene Hochachse, nach links und nach rechts drehen kann.

Mit der Translation und der Rotation des Oberteils 11 der Sitzbasis 10 führt auch ein auf dem Oberteil 11 angebrachter Sitzaufbau 40 diese Bewegung aus. Aufgrund der Fixierung des Unterteils 12 der Sitzbasis 10, dient die untere Anbindungsstelle 17 als stationäre Referenz für die obere Anbindungsstelle 16. Mit der translatorischen und/oder rotatorischen Bewegung des Oberteils 11 der Sitzbasis 10 verändert sich die Lage der oberen Anbindungsstelle 16 relativ zur unteren Anbindungsstelle 17. Wenn sich die obere Anbindungsstelle 16 mit dem oberen Anbindungselement 31 von der unteren Anbindungsstelle 17 mit dem unteren Anbindungselement 35 entfernt, spannt sich das dazwischenliegende Gurtband 36.

Im gezeigten Ausführungsbeispiel in Figur 1a ist die Vorrichtung zur Begrenzung einer Rotations- und/oder Translationsbewegung auf der in Sitzrichtung rechten Seite der Hochachse positioniert. Daher vergrößert sich die Entfernung der Anbindungsstellen 16 und 17 voneinander, wenn das Oberteil 11 der Sitzbasis in Sitzrichtung nach rechts dreht. Zudem vergrößert sich die Entfernung der Anbindungsstellen 16 und 17 voneinander ebenfalls, wenn das Oberteil 11 der Sitzbasis 10 nach hinten verschoben wird. Die Entfernung der Anbindungsstellen vergrößert sich zudem bei einer Überlagerung der beschriebenen translatorischen und rotatorischen Bewegung des Oberteils 11 der Sitzbasis 10. Das Gurtband 36 spannt sich umso mehr, je weiter sich die obere Anbindungsstelle 16 mit dem oberen Anbindungselement 31 von der unteren Anbindungsstelle 17 mit dem unteren Anbindungselement 35 entfernt, solange bis das Gurtband 36 vollständig gespannt ist.

Der automatische Einzug 37 nimmt das Gurtband 36 ganz oder teilweise in sich auf, wenn es nicht gespannt ist. Wird das Gurtband gespannt, gibt der automatische Einzug 37 das Gurtband wieder frei.

Die Verstelleinheit 20 ermöglicht also eine rotatorische und/oder translatorische Bewegung des Oberteils 11 der Sitzbasis 10 relativ zum Unterteil 12 der Sitzbasis 10. In Folge einer translatorischen und/oder rotatorischen Bewegung des Oberteils 11 und/oder des Unterteils 12 spannt oder entspannt sich das flexible Begrenzungselement 32, hier ausgeführt als Gurtband 36. Wenn dieses voll gespannt ist, ist die zugelassene translatorische und/oder rotatorische Bewegung ausgeschöpft und jede Bewegung darüber hinaus wird begrenzt. Dabei wird die zugelassene translatorische Bewegung umso mehr reduziert, je weiter ein vorhandener Bewegungsspielraum bereits durch eine Drehung des Oberteils 11 der Sitzbasis 10 ausgeschöpft ist. Gleiches gilt für die maximal zugelassene rotatorische Bewegung, wenn ein Teil des Bewegungsspielraums bereits durch eine translatorische Verschiebung des Oberteils 11 der Sitzbasis 10 ausgeschöpft ist.

Während der translatorischen und/oder rotatorischen Bewegung des Oberteils 11 der Sitzbasis 10 dienen insbesondere die kreisbogenförmigen Aussparungen des oberen 31 und unteren 35 Anbindungselements dazu, dass sich das Gurtband 36, welches daran angebracht ist, ausrichten kann. Zusätzlich wird dies durch das Spiel befördert, das aufgrund der Schlaufenverbindung an dem oberen 33 und unteren Ende 34 vorhanden ist. Die flache Ausführung des unteren Anbindungselements 35 als Platte lässt sich vorteilhaft so in die Sitzbasis 10 integrieren, dass wenig Bauraum erforderlich ist. Das obere Anbindungselement 31 nutzt durch die Winkelkonstruktion den zur Verfügung stehenden Bauraum ebenfalls effizient aus und ermöglicht zudem eine ungehinderte Ausrichtung des Gurtbands 36.

Das flexible Begrenzungselement 32 koppelt demnach die translatorische Bewegung des Oberteils 11 und des Unterteils 12 der Sitzbasis 10 zueinander, an die rotatorische Bewegung und umgekehrt, wobei die translatorische und rotatorische Bewegung ein gemeinsames Kontingent an Bewegungsspielraum ausschöpfen.

Die zusätzliche Funktion des automatischen Einzugs 37 führt dazu, dass das Gurtband 36 im ungespannten Zustand aufgerollt und verstaut wird, statt durchzuhängen.

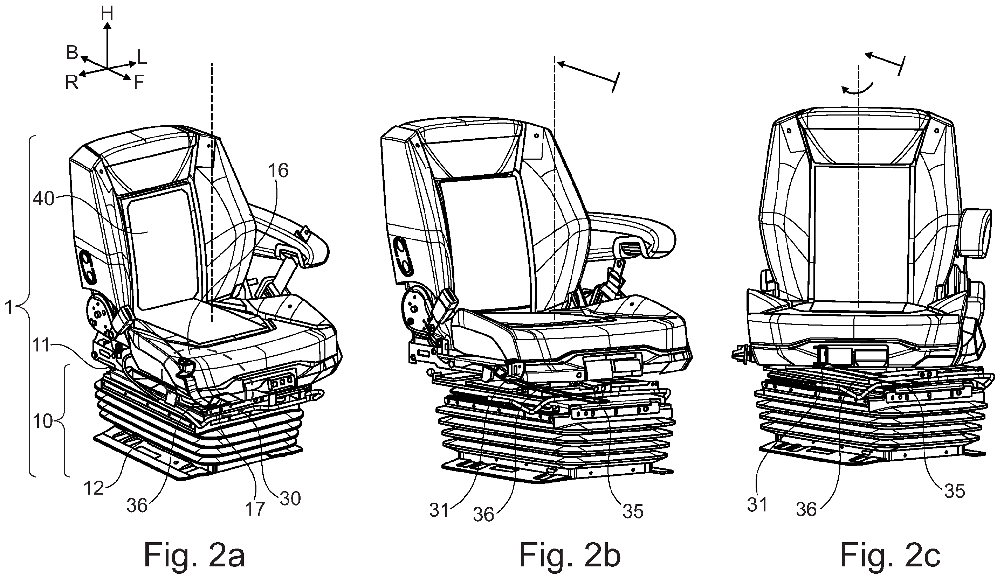

Mit Bezug zu Figuren 2a bis 2c wird ein integrierter Einbau einer Ausführungsform einer Vorrichtung zur Begrenzung einer Rotations- und/oder Translationsbewegung mit Anbindungselementen und einem Gurtband beschrieben. Dabei wird von oben dargestelltem Ausführungsbeispiel ausgegangen, insbesondere werden die gleichen Bezugszeichen für Elemente mit gleicher Funktion verwendet wie in den Figuren 1a bis 1c.

Figur 2a zeigt eine Vorrichtung zur Begrenzung einer Rotations- und/oder Translationsbewegung 30 in einer integrierten Einbaulage in einem Sitz 1 mit Sitzaufbau 40. Von links nach rechts sind in Figur 2a bis 2c unterschiedliche Positionen des Sitzaufbaus 40 und damit des Oberteils 11 der Sitzbasis 10 dargestellt, wodurch sich unterschiedliche relative Lagen der Anbindungsstellen 16 und 17 und damit auch der Anbindungselemente 31 und 35 zueinander ergeben.

Die rotatorische und/oder translatorische Bewegung, die zu der gezeigten Position geführt hat, wird durch die oberhalb der Figuren dargestellten Pfeile veranschaulicht. Das Koordinatensystem veranschaulicht die Orientierungen in Sitzrichtung. Die R- und L-Achse gibt links und rechts an, die Richtung B gibt die Richtung nach hinten an, die Richtung F zeigt nach vorne. Die H-Achse ist die Hochachse, welche auch die Rotationsachse darstellt. Sie wird zusätzlich durch die gestrichelte vertikale Linie als Hochachse des Oberteils 11 der Sitzbasis 10 gezeigt. Der Aufbau bleibt für alle gezeigten Positionen gleich und kann anhand von Figur 2a beschrieben werden.

Die Vorrichtung zur Begrenzung einer Rotations- und/oder Translationsbewegung 30 weist ein oberes 31 und ein unteres Anbindungselement 35 auf. Das flexible Begrenzungselement ist als Gurtband 36 ausgeführt. Das obere Anbindungselement 31 ist an dem Oberteil 11 der Sitzbasis 10 festgelegt und verbindet dieses mit dem oberen Ende des Gurtbands 36. Das untere Anbindungselement 35 ist an dem Unterteil 12 der Sitzbasis 10 festgelegt und verbindet dieses mit dem unteren Ende des Gurtbands 36.

Die untere Anbindungsstelle 17 und damit das unteren Anbindungselement 35 sind auf dem Unterteil 12 der Sitzbasis 10 in Sitzrichtung vorne und rechts der Hochachse des Unterteils 12 positioniert. Die obere Anbindungsstelle 16 und damit das obere Anbindungselement 31 sind unterhalb des Oberteils 11 der Sitzbasis 10 in Sitzrichtung hinten und rechts der Hochachse des Oberteils 11 positioniert.

Auf dem Oberteil 11 der Sitzbasis 10 ist der Sitzaufbau 40 angebracht. In der beispielhaften Ausführung in Figur 2a ist das Unterteil 12 der Sitzbasis 10 fest mit dem Fahrzeugboden verbunden und somit stationär. Damit ist auch das untere Anbindungselement 35 stationär festgelegt und dient als Referenz für die maximale Drehbewegung des Oberteils 11. Das Oberteil 11 der Sitzbasis 10 lässt sich, mit dem darauf angebrachten Sitzaufbau 40, translatorisch in Sitzrichtung nach vorne und nach hinten verschieben und um seine Hochachse drehen. Das Gurtband 36 wird, bei Entfernung der oberen und unteren Anbindungsstelle 16 und 17 und damit des oberen und unteren Anbindungselements 31 und 35 voneinander, gespannt. Im gespannten Zustand ist keine weitere Entfernung der oberen und unteren Anbindungsstelle 16 und 17 und damit des oberen und unteren Anbindungselements 31 und 35 voneinander mehr möglich.

In Figur 2a ist eine Ausgangsstellung des Oberteils 11 der Sitzbasis 10 mit Sitzaufbau 40 gezeigt, in welcher das Oberteil 11 translatorisch und in Sitzrichtung maximal nach vorne verschoben ist. Die obere und untere Anbindungsstelle 16 und 17 und damit das obere und untere Anbindungselement 31 und 35 weisen in dieser Position die geringste Entfernung zueinander auf, sodass das Gurtband 36 durchhängt. In dieser Position wird der maximale Drehwinkel des Oberteils 11 der Sitzbasis 10 mit Sitzaufbau 40 ermöglicht.

Figur 2b zeigt eine Stellung des Oberteils 11 der Sitzbasis 10 mit Sitzaufbau 40, in welcher diese translatorisch und in Sitzrichtung maximal weit nach hinten verschoben sind. Das Gurtband 36 ist bereits aufgrund der translatorischen Verschiebung voll gespannt und lässt keine Drehung des Oberteils 11 in Sitzrichtung nach rechts zu.

Figur 2c zeigt eine Stellung des Oberteils 11 der Sitzbasis 10 mit Sitzaufbau 40, in welcher diese translatorisch und in Sitzrichtung nach hinten verschoben, jedoch noch nicht an der maximalen Endposition angekommen sind. In dieser Position wird die Drehbewegung des Oberteils 11 der Sitzbasis 10 mit Sitzaufbau 40 in Sitzrichtung nach rechts durch das Spannen des Gurtbandes 36 begrenzt. Dabei spannt sich das Gurtband 36 zunehmend mit weiterer Drehung des Oberteils 11 nach rechts, bis das Gurtband 36 voll gespannt und damit der maximal mögliche Drehwinkel erreicht ist. Somit ist gerade keine ungehinderte Drehung nach rechts mehr möglich. In der Stellung in welcher der maximale Drehwinkel des Oberteils 11 erreicht ist, ist zudem keine weitere translatorische Bewegung des Oberteils 11 nach hinten möglich, da auch diese Bewegung durch das Gurtband 36 begrenzt wird.

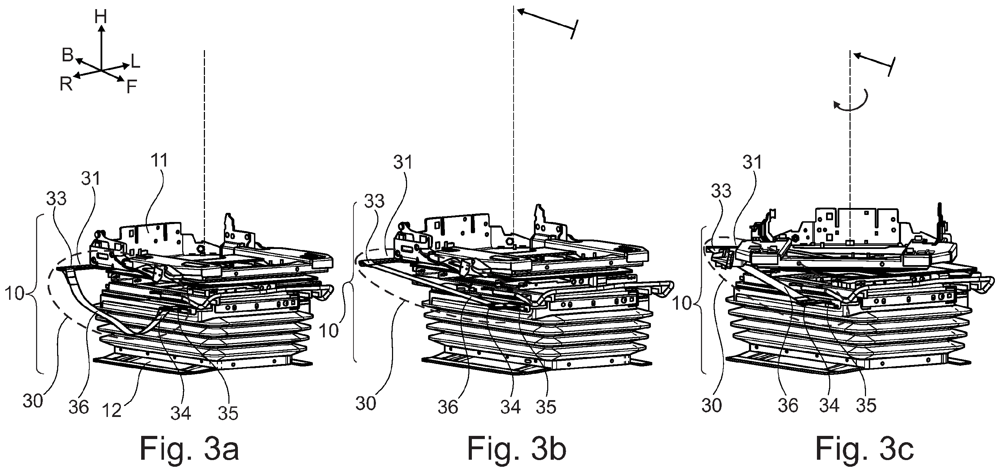

Mit Bezug zu Figuren 3a bis 3c wird ein nachrüstbarer Einbau einer Ausführungsform einer Vorrichtung zur Begrenzung einer Rotations- und/oder Translationsbewegung mit Anbindungselementen und einem Gurtband beschrieben. Dabei wird von oben dargestellten Ausführungsbeispielen ausgegangen, insbesondere werden die gleichen Bezugszeichen für Elemente mit gleicher Funktion verwendet wie in den Figuren 1a bis 1c. Unterschiede zu den bereits dargestellten Ausführungsformen werden hervorgehoben.

Figur 3a zeigt beispielhaft eine Vorrichtung zur Begrenzung einer Rotations- und/oder Translationsbewegung 30 in einer nachrüstbaren Einbaulage in einer Sitzbasis 10. Von links nach rechts sind in Figur 3a bis 3c unterschiedliche Positionen des Oberteils 11 relativ zum Unterteil 12 der Sitzbasis 10 gezeigt, wodurch sich unterschiedliche relative Lagen der Anbindungselemente 31 und 35 zueinander ergeben. Das flexible Begrenzungselement wird in einer Ausführungsform als Gurtband 36 gezeigt.

Die rotatorische und/oder translatorische Bewegung, die zu der gezeigten Position geführt hat, wird durch die oberhalb der Figuren dargestellten Pfeile veranschaulicht. Das Koordinatensystem zeigt die Orientierung in Sitzrichtung. Die R- und L-Achse gibt links und rechts an, die Richtung B gibt die Richtung nach hinten an, die Richtung F zeigt nach vorne. Die H-Achse ist die Hochachse, welche auch die Rotationsachse darstellt. Sie wird zusätzlich durch die gestrichelte vertikale Linie als Hochachse des Oberteils 11 der Sitzbasis 10 gezeigt.

Der Aufbau bleibt für alle gezeigten Positionen gleich. Der Aufbau entspricht dem in Figur 2a mit dem Unterschied, dass die Vorrichtung zur Begrenzung einer Rotations- und/oder Translationsbewegung 30 nicht in die Sitzbasis 10 integriert, sondern außen an der Sitzbasis 10 angebracht ist. Zudem wird in den Figuren 3a bis 3c der Sitzaufbau nicht gezeigt.

Das untere Anbindungselement 35 ist in Sitzrichtung vorne und an der rechten Seite des Unterteils 12 der Sitzbasis 10 positioniert. Das obere Anbindungselement 31 ist in Sitzrichtung hinten und an der rechten Seite unterhalb des Oberteils 11 der Sitzbasis 10 positioniert.

Das obere Anbindungselement 31 ist als L-förmige Platte aus Metall ausgestaltet, welches eine kreisförmige Aussparung für die Verbindung des oberen Endes 33 des Gurtbands 36 aufweist und zwei Durchgangsbohrungen für die Befestigung des oberen Anbindungselements 31 an dem Oberteil 11 der Sitzbasis 10. Das untere Anbindungselement 35 ist in der gezeigten Ausführungsform als Winkelelement aus Metall ausgeführt, welches wiederum eine kreisförmige Aussparung aufweist, an welcher das untere Ende 34 des Gurtbands 36 mittels einer Schlaufe verbunden ist. Das untere Anbindungselement 35 weist an dem abgewinkelten Ende ebenfalls zwei Durchgangsbohrungen auf. An diesen wird das untere Anbindungselement 35 mit dem Unterteil 12 der Sitzbasis verbunden.

Die in Figuren 3a bis 3c dargestellten Positionen des Oberteils der Sitzbasis entsprechen den Positionen in Figuren 2a bis c, sodass hinsichtlich der Beschreibung der Bewegungsmuster auf diese Figuren verwiesen wird.

Die Ausführungsform der Vorrichtung zur Begrenzung einer Translations- und Rotationsbewegung, welche in den Figuren 3a bis 3c gezeigt wird, ermöglicht die Anbringung der Vorrichtung von außen. Hierdurch kann die Vorrichtung besonders einfach nachgerüstet werden, ohne den Sitz ganz oder teilweise auszubauen und/oder zu demontieren. Dennoch wird durch die gewählte Form und Anbringung der Anbindungselemente 31 und 35 die ungehinderte Ausrichtung des Gurtbands 36 sichergestellt. Gleichzeitig erfordert die flache Ausführung der Anbindungselemente 31 und 35 wenig Bauraum, sodass diese universell und für eine Vielzahl unterschiedlicher Sitze nachgerüstet werden können.

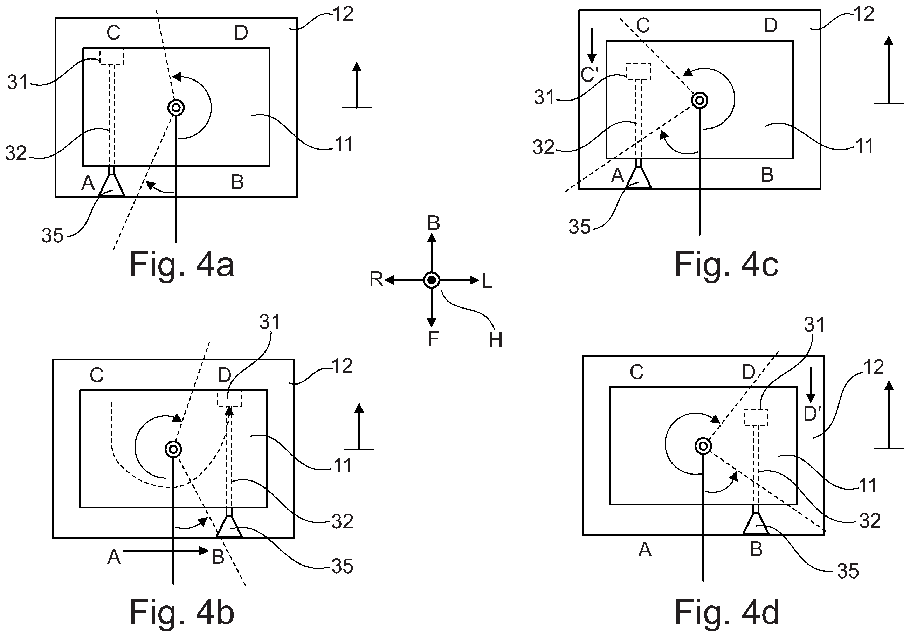

Mit Bezug zu Figuren 4a bis 4d wird eine schematische Darstellung beispielhafter Positionen der oberen und unteren Anbindungsstellen beschrieben. Dabei wird von oben dargestellten Ausführungsbeispielen ausgegangen, insbesondere werden die gleichen Bezugszeichen für Elemente mit gleicher Funktion verwendet wie in den Figuren 1a bis 1c. Unterschiede zu den bereits dargestellten Ausführungsformen werden hervorgehoben.

Die Figuren 4a bis 4d zeigen in einer schematischen Darstellung beispielhaft verschiedene Positionen A bis D, C' und D' der oberen und unteren Anbindungsstellen. Dargestellt wird eine Draufsicht des Einbaus der Vorrichtung in eine Sitzbasis mit einem Oberteil 11 und einem Unterteil 12. Erkennbar ist, ebenfalls schematisch dargestellt, eine Vorrichtung zur Begrenzung einer Rotations- und/oder Translationsbewegung mit einem flexiblen Begrenzungselement 32, sowie einem oberen 31 und einem unteren Anbindungselement 35. Die Position des oberen 31 und des unteren Anbindungselements 35 gibt auch die Position der oberen und unteren Anbindungsstellen wieder.

Das Koordinatensystem zeigt die Orientierung in Sitzrichtung an. Die R- und L-Achse gibt links und rechts an, die Richtung B gibt die Richtung nach hinten an, die Richtung F zeigt nach vorne. Die H-Achse ist die Hochachse, welche auch die Rotationsachse darstellt. Die Pfeile im Uhrzeigersinn zeigen die mögliche Rotation des Oberteils 11 der Sitzbasis, um dessen Hochachse, in Sitzrichtung nach rechts, die Pfeile entgegen dem Uhrzeigersinn zeigen die mögliche Rotation des Oberteils 11 der Sitzbasis, um dessen Hochachse, in Sitzrichtung nach links. Die vertikale Volllinie, welche vom Mittelpunkt des Oberteils 11 ausgeht, gibt die Ausgangslage an. Die gestrichelten Linien geben die maximal zugelassene Lage nach der Rotation nach links oder nach rechts an.

Der Aufbau der Figuren 4a bis 4d kann anhand der Figur 4a beschrieben werden. Das obere Anbindungselement 31 ist an der oberen Anbindungsstelle unterhalb des Oberteils 11 der Sitzbasis festgelegt und wird als Rechteck dargestellt. Das untere Anbindungselement 35 ist an der unteren Anbindungsstelle auf dem Unterteil 12 der Sitzbasis festgelegt, dargestellt als Dreieck. Die grundsätzliche Bewegung des Oberteils 11 der Sitzbasis relativ zum Unterteil 12 der Sitzbasis entspricht der Bewegung, wie sie zu Figur 1a beschrieben wurde und ist für alle gezeigten Figuren 4a bis 4d gleich. Im Unterscheid zur Beschreibung der Bewegung zu Figur 1a, sollen die Figuren 4a bis 4d veranschaulichen, wie sich eine Veränderung der Position der Anbindungselemente 31 und 35 auf die maximal zugelassene Bewegung des Oberteils 11 auswirkt. Die gezeigte maximale Rotation und die maximale Translation werden lediglich zu Anschauungszwecken unabhängig voneinander dargestellt, in der Anwendung überlagern sich diese beiden Bewegungen.

Figur 4a zeigt eine Ausgangslage, in welcher sich die obere Anbindungsstelle an der Position C und die untere Anbindungsstelle an der Position A befindet. Dies entspricht den in Figur 2a beschriebenen Positionen. Durch die Vorrichtung zur Begrenzung einer Rotations- und/oder Translationsbewegung wird die Rotation des Oberteils 11 der Sitzbasis nach rechts stärker eingeschränkt als die Rotation nach links. Findet keine Rotation statt, wird die Translation des Oberteils 11 in dem Maß wie durch den Pfeil rechts der Figur 4a gezeigt, begrenzt.

Figur 4b zeigt eine Veränderung der Positionen der oberen und unteren Anbindungselemente 31 und 35 von C nach D und von A nach B. Der gestrichelte Pfeil gibt beispielhaft einen Weg an, welchen das obere Anbindungselement 31 zurücklegen müsste, um die Position C während der Nutzung auf eine Position D einzustellen. Der gezeigte Pfeil von A nach B gibt beispielhaft an, über welchen Weg das untere Anbindungselement 35 von einer Position A auf eine Position B eingestellt werden kann. Hierdurch wird die Vorrichtung zur Begrenzung einer Rotations- und/oder Translationsbewegung auf die gegenüberliegende Seite der Sitzbasis verschoben und die Begrenzung der Rotation des Oberteils der Sitzbasis wird in Sitzrichtung nach links stärker begrenzt als in Sitzrichtung nach rechts. Die Begrenzung der Translationsbewegung wird nicht verändert.

Figur 4c zeigt, im Vergleich zu Figur 4a, eine Veränderung der Position des oberen Anbindungselements 31 von C nach C'. Hierdurch wird der Abstand zwischen den Anbindungsstellen verkürzt, was in einer größeren Bewegungsfreiheit für die Rotationsbewegung des Oberteils 11 der Sitzbasis, in beide Richtungen, resultiert. Findet keine Rotation statt, wird die Translation des Oberteils 11 in dem Maß wie durch den Pfeil rechts der Figur 4c gezeigt, begrenzt. Im Vergleich zu der Positionierung in Figur 4a, wird demnach mehr Translationsbewegung zugelassen.

Figur 4d zeigt, im Vergleich zu Figur 4b, eine Veränderung der Position des oberen Anbindungselements 31 von D nach D'. Hierdurch wird der Abstand zwischen den Anbindungsstellen verkürzt, was in einer größeren Bewegungsfreiheit für die Rotationsbewegung des Oberteils 11 der Sitzbasis, in beide Richtungen, resultiert. Findet keine Rotation statt, wird die Translation des Oberteils 11 in dem Maß wie durch den Pfeil rechts der Figur 4d gezeigt, begrenzt. Im Vergleich zu der Positionierung in Figur 4b, wird demnach mehr Translationsbewegung zugelassen.

Die unterschiedlichen Positionen der Anbindungselemente 31 und 35 in den Figuren 4a bis 4d zeigen, welche Auswirkung die Positionierung auf die Begrenzung der Translation und Rotation des Oberteils 11 der Sitzbasis hat. Eine Veränderung der Positionen der Anbindungselemente 31 und 35 von der in Sitzrichtung rechten Seite der Hochachse auf die linke Seite geht mit einer Umkehrung der Richtung größerer und geringerer Begrenzung einer Rotationsbewegung des Oberteils 11 der Sitzbasis einher. Die Begrenzung der translatorischen Bewegung wird hierdurch nicht verändert. Eine Veränderung der Positionen so, dass die Entfernung der Anbindungselemente 31 und 35, bei gleichbleibender Länge des flexiblen Begrenzungselements 32, verringert wird, geht mit einer Erweiterung des rotatorischen und translatorischen Bewegungsumfangs einher. Die Einstellung der Positionen kann in dem gezeigten Ausführungsbeispiel auch während der Nutzung durch den Nutzer selbst vorgenommen werden, was eine zusätzliche Individualisierung ermöglicht.

Mit der erfindungsgemäßen Vorrichtung zur Begrenzung einer Rotations- und/oder Translationsbewegung, dem Sitz für ein Fahrzeug der eine Vorrichtung zur Begrenzung einer Rotations- und/oder Translationsbewegung aufweist und der Verwendung eines flexiblen Begrenzungselements zur Begrenzung einer Rotations- und/oder Translationsbewegung, ist es möglich, die bekannten Probleme die entstehen, wenn einerseits ein Fahrzeugsitz drehbar sein soll, andererseits das Platzangebot in einem Fahrzeug begrenzt ist, zu lösen. Erfindungsgemäß erfolgt eine Kopplung einer zulässigen translatorischen und/oder rotatorischen Bewegung durch die Vorrichtung, insbesondere über mindestens ein flexibles Begrenzungselement. Hierdurch kann die Festlegung eines maximal zulässigen Drehwinkels oder eines maximal zurücklegbaren translatorischen Weges automatisch in Abhängigkeit der zuvor erfolgten translatorischen Verschiebung eines Sitzes und/oder dessen Rotation erfolgen.

### Bezugszeichenliste

- 1: Sitz
- 10: Sitzbasis
- 11: Oberteil der Sitzbasis
- 12: Unterteil der Sitzbasis

- 16: Obere Anbindungsstelle
- 17: Untere Anbindungsstelle

- 20: Verstelleinheit
- 21: Rotationselement
- 22: Translationselement

- 30: Rotations- und Translationsbewegungs-Begrenzungsvorrichtung
- 31: Oberes Anbindungselement
- 32: Flexibles Begrenzungselement
- 33: Oberes Ende des flexiblen Begrenzungselements
- 34: Unteres Ende des flexiblen Begrenzungselements
- 35: Unteres Anbindungselement
- 36: Gurtband
- 37: automatischer Einzug

- 40: Sitzaufbau

## Patentansprüche

1. Vorrichtung zur Begrenzung einer Rotations- und Translationsbewegung (30) für eine Sitzbasis (10), wobei die Sitzbasis (10) ein Oberteil (11) und ein Unterteil (12) umfasst, wobei das Oberteil (11) und das Unterteil (12) relativ zueinander rotatorisch und/oder translatorisch über eine Verstelleinheit (20) bewegbar sind; umfassend
mindestens ein flexibles Begrenzungselement (32) mit einem oberen Ende (33) und mit einem unteren Ende (34);
wobei das obere Ende (33) an einer oberen Anbindungsstelle (16) an dem Oberteil (11) festgelegt ist;
wobei das untere Ende (34) an einer unteren Anbindungsstelle (17) an dem Unterteil (12) festgelegt ist;
wobei das mindestens eine flexible Begrenzungselement (32) die translatorische und/oder die rotatorische Bewegung des Oberteils (11) und des Unterteils (12) gegeneinander begrenzt.

2. Vorrichtung gemäß Anspruch 1, wobei die Begrenzung der translatorischen und/oder rotatorischen Bewegung über eine relative Lage der oberen Anbindungsstelle (16) und der unteren Anbindungsstelle (17) zueinander und/oder über eine Länge des flexiblen Begrenzungselements (32) einstellbar ist.

3. Vorrichtung gemäß einem der vorhergehenden Ansprüche, wobei das flexible Begrenzungselement (32) ein Band, insbesondere Gurtband (36) ist.

4. Vorrichtung gemäß einem der vorhergehenden Ansprüche, wobei das flexible Begrenzungselement (32) aufrollbar ist, insbesondere über einen automatischen Einzug (37).

5. Vorrichtung gemäß einem der vorhergehenden Ansprüche, wobei die Position der oberen Anbindungsstelle (16) und/oder die Position der unteren Anbindungsstelle (17) einstellbar ist.

6. Sitz (1) für ein Fahrzeug, insbesondere für ein Nutzfahrzeug aufweisend eine Vorrichtung zur Begrenzung einer Rotations- und Translationsbewegung (30) gemäß einem der vorhergehenden Ansprüche.

7. Verwendung mindestens eines flexiblen Begrenzungselements (32) zur Begrenzung einer rotatorischen und/oder translatorischen Bewegung eines Oberteils (11) und eines Unterteils (12) relativ zueinander;
wobei die Begrenzung der Bewegung durch das Festlegen eines oberen Endes (33) des flexiblen Begrenzungselements (32) an einer oberen Anbindungsstelle (16) am Oberteil (11) und eines unteren Endes (34) des flexiblen Begrenzungselements an einer unteren Anbindungsstelle (17) am Unterteil (12) erfolgt.
